Europäisches Patentamt

European Patent Office

Office européen des brevets

(19)

(11) Veröffentlichungsnummer : **0 180 109**
**B1**

(12) # EUROPÄISCHE PATENTSCHRIFT

(45) Veröffentlichungstag der Patentschrift :
21.12.88

(51) Int. Cl.⁴ : **B 32 B 5/24**, C 08 J 9/40, C 08 G 69/16

(21) Anmeldenummer : 85113225.8

(22) Anmeldetag : 18.10.85

(54) **Flächiger Verbundwerkstoff.**

(30) Priorität : 27.10.84 DE 3439461

(43) Veröffentlichungstag der Anmeldung :
07.05.86 Patentblatt 86/19

(45) Bekanntmachung des Hinweises auf die Patenterteilung : 21.12.88 Patentblatt 88/51

(84) Benannte Vertragsstaaten :
BE DE FR GB IT SE

(56) Entgegenhaltungen :
FR-A- 2 266 594
GB-A- 1 278 378
US-A- 3 915 772

(73) Patentinhaber : BASF Aktiengesellschaft
Carl-Bosch-Strasse 38
D-6700 Ludwigshafen (DE)

(72) Erfinder : Horn, Peter, Dr.
Neue Stuecker 15
D-6900 Heidelberg (DE)
Erfinder : Baumann, Edwin
Laurentiusstrasse 11
D-6707 Schifferstadt (DE)
Erfinder : Marx, Matthias, Dr.
Seebacher Strasse 49
D-6702 Bad Duerkheim (DE)
Erfinder : Gerarts, Peter
Friedrich-Ebert-Strasse 1a
D-4514 Ostercappeln (DE)

# Beschreibung

Die Erfindung betrifft einen flächigen Verbundwerkstoff aus alkalisch polymerisiertem Polyamid, welches durch ein textiles Flächengebilde verstärkt ist.

Faserverbundwerkstoffe aus faserverstärktem Polyamid können bekanntlich durch aktivierte alkalische Polymerisation von Lactam in Gegenwart von Glasfasermatten hergestellt werden. Dabei kann diskontinuierlich nach der RIM-Technologie gearbeitet werden, indem man die Matten in eine Form einlegt und die Lactamschmelze einspritzt und polymerisiert (DE-A-28 17 778 und DE-A-33 25 554). Man kann auch kontinuierlich auf einer Doppelbandpresse Glasmatten mit der Lactamschmelze zusammenführen und verpressen. In beiden Fällen erhält man flächige Formteile mit hervorragenden mechanischen und thermischen Eigenschaften. Ihre Oberfläche ist jedoch nicht ganz einwandfrei, da die Glasfasern so nahe an die Oberfläche vordringen, daß sich eine gewisse Rauhigkeit auf der Formteiloberfläche ausbildet.

Der Erfindung lag daher die Aufgabe zugrunde, einen flächigen Verbundwerkstoff auf Basis von mit einem textilen Fasergebilde verstärken, alkalisch polymerisierten Polyamid bereitzustellen, welcher eine glatte, faserfreie Oberfläche aufweist.

Diese Aufgabe wird erfindungsgemäß dadurch gelöst, daß man dem Verbundwerkstoff mindestens eine Oberflächenschicht aus einem offenzelligen Aminoplast- oder Phenoplast-Schaum einverleibt.

Gegenstand der Erfindung ist demzufolge ein flächiger Verbundwerkstoff, aufgebaut aus

A. einer Kernschicht aus einem textilen Fasergebilde,

B. mindestens einer Oberflächenschicht aus einem offenzelligen Aminoplast- oder Phenoplast-Schaum und

C. einer Kunststoffmatrix aus alkalisch polymerisiertem Polyamid, welche sowohl die Kernschicht als auch die Oberflächenschicht(en) durchdringt.

Es war nicht ohne weiteres zu erwarten, daß das flüssige Lactam den sehr feinzelligen Aminoplast- bzw. Phenoplast-Schaum vollständig durchdringt, so daß bei der Polymerisation eine blasenfreie Polyamidmatrix entsteht. Bei Verwendung von ebenfalls offenzelligen Polyurethan-Schäumen erhält man jedenfalls keine einwandfreien Verbundwerkstoffe.

Die Kernschicht A besteht aus einem textilen Fasergebilde. Diese kann als Matte, Vlies, Gewebe oder Filz vorliegen ; die Fasern können aus Glas, Kohlenstoff, aromatischem Polyamid, Polyethylenterephthalat, Polybutylenterephthalat oder auch aus natürlichen Materialien wie Baumwolle bestehen. Bevorzugt sind Glasmatten mit einem Flächengewicht von 150 bis 1 200 g/m². Die Matten können auf übliche Weise mechanisch durch Nadeln verfestigt sein oder durch übliche Bindemittel, wie z. B. Polyurethane gebunden sein. Der Durchmesser der Fasern beträgt vorzugsweise 7 bis 20 μm, die Glasfasern sind zweckmäßigerweise mit üblichen, die Polymerisation nicht störenden Schlichten versehen, wie sie beispielsweise in der US-A 4 358 502 beschrieben sind. Die Dicke der Kernschicht beträgt vorzugsweise 0,1 bis 20, insbesondere 1 bis 10 mm.

Die erfindungsgemäßen flächigen Verbundwerkstoffe weisen vorzugsweise beidseitig Oberflächenschichten B auf. Diese bestehen aus einem Aminoplast- oder Phenoplast-Schaum. Es ist wesentlich, daß diese Schäume offenzellig sind, damit sie von der Lactam-Schmelze durchdrungen werden können. Bevorzugt sind elastische Schäume, wie sie in den EP-A-17 672, EP-A-31 513 und EP-A-49 768 beschrieben sind. Ihre Dichte liegt zwischen 3 und 300, vorzugsweise zwischen 5 und 100 g/l ; die Dicke der Oberflächenschicht(en) beträgt vorzugsweise 0,1 bis 10, insbesondere 1 bis 5 mm.

Sowohl Kernschicht als auch Oberflächenschicht(en) sind von einer Kunststoffmatrix C aus alkalisch polymerisiertem Polyamid durchdrungen.

Die Herstellung von Polyamid-Formkörpern durch aktivierte alkalische Lactampolymerisation ist bekannt. Sie ist beispielsweise im Kunststoff-Handbuch, Band VI, Polyamide, Carl-Hanser-Verlag 1966, Seiten 46 bis 49 ausführlich beschrieben. Dabei geht man von zwei Komponenten aus, wobei die eine Komponente eine Katalysator enthaltende Lactam-Schmelze und die andere Komponente eine Aktivator enthaltende Lactam-Schmelze ist. Die beiden Komponenten werden gemischt, in eine Form transportiert und dort polymerisiert.

Bevorzugtes Lactam ist ε-Caprolactam, darüber hinaus können auch Pyrrolidon, Capryllactam, Laurinlactam, Önanthlactam sowie die entsprechenden C-substituierten Lactame eingesetzt werden. Die Lactame können auch modifiziert sein, beispielsweise mit Polyetherolen, präpolymeren Isocyanaten oder mit Bisacyl-Lactamen. Bezogen auf das Gewicht des fertigen Verbundwerkstoffs werden 99 bis 30, vorzugsweise 90 bis 40 % Lactam eingesetzt.

Geeignete Katalysatoren sind z. B. Alkali- und Erdalkaliverbindungen von Lactamen, wie Natrium-ε-caprolactamat, oder von kurzkettigen aliphatischen Carbonsäuren, wie Natrium- oder Kaliumformiat, oder von Alkoholen mit 1 bis 6 Kohlenstoffatomen, wie Natriummethylat oder Kalium-tert.-butylat. Außerdem können auch Alkalioder Erdalkalihydride, -hydroxide oder -carbonate verwendet werden, sowie Grignard-Verbindungen. Die Katalysatoren werden üblicherweise in Mengen von 0,1 bis 10 Mol.%, bezogen auf Gesamt-Lactam, eingesetzt.

Als Aktivatoren kommen in Frage : N-Acyllactame, wie N-Acetylcaprolactam, Bisacyllactame,

substituierte Triazine, Carbodiimide, Ketene, Cyanamide, Mono- und Polyisocyanate, sowie maskierte Isocyanatverbindungen. Sie werden bevorzugt in Mengen von 0,1 bis 10 Mol.% eingesetzt.

Die Schlagzähigkeit der Formmassen kann durch übliche Zusätze, wie Polyalkylenglykole mit Molekulargewichten von 2 000 bis 100 000 erhöht werden, ferner durch Zusatz von reaktiven oder nicht reaktiven Kautschuken, wie z. B. Pfropfpolymerisaten.

Die Polymerisation des Lactams kann in Gegenwart üblicher Stabilisatoren durchgeführt werden. Besonders vorteilhaft ist eine Kombination von Cul und KI im Molverhältnis 1 : 3, die in Mengen von 50 bis 100 ppm Kupfer, bezogen auf Gesamt-Lactam, der aktivatorhaltigen Komponente B zugesetzt wird. Weitere geeignete Stabilisatoren sind Kryptophenole und Amine.

Weitere Zusatzstoffe sind anorganische Füllstoffe in Mengen von 1 bis 60 Gew.% (bezogen auf das Formteil), welche die Polymerisation nicht stören, z. B. Metallpulver, Quarzmehl, Metalloxide, Graphit, Ruß, Silicagel, Pigmente, Wollastonit und Kreide. Ferner können Lichtstabilisatoren, optisch aufhellend wirkende Substanzen, Flammschutzmittel, Kristallisationsbeschleuniger, wie z. B. Talkum oder Polyamid-2,2, Schmiermittel wie Molybdänsulfid, sowie schrumpfmindernde Substanzen zugesetzt werden.

Zweckmäßig ist ferner der Zusatz von inneren Trennmitteln in Mengen von 0,05 bis 2 Gew.%, beispielsweise von Stearaten des Calciums, Natriums oder Kaliums, von Stearylstearat oder Octadecylalkohol.

Die bei dem diskontinuierlichen Verfahren angewandte Arbeitsweise entspricht einer modifizierten Reaktionsspritzgußtechnik (RIM), die für Polyurethane, z. B. von Piechota und Röhr in « Integralschaumstoffe », Carl-Hanser-Verlag 1975, Seiten 34 bis 37, beschrieben ist.

Die beiden Lactam-Komponenten werden in Vorlagekesseln getrennt auf eine Temperatur oberhalb des Schmelzpunktes des Lactams, vorzugsweise auf 80 bis 140 °C, temperiert. Mit hydraulisch angetriebenen, beheizten Tauchkolbenpumpen werden die Komponenten durch beheizte Rohre zu einem ebenfalls beheizten Mischkopf gefördert. Beim Einpressen in die Form wird der Räumkolben des Mischkopfes zurückgezogen und die beiden genau dosierten Komponenten treten in die geöffnete Mischkammer ein, werden dort innig vermischt und in die angeflanschte Form eingepreßt. Dies geschieht im allgemeinen unter einem Druck von mehr als 1 bar, vorzugsweise von 1,1 bis 300 bar und insbesondere bei 2 bis 30 bar. Innerhalb von 2 bis 50 s, vorzugsweise von 3 bis 20 s, ist die Lactam-Schmelze vollständig von dem Mischkopf in die Form überführt. Eine Stickstoffspülung der Form ist nicht erforderlich.

Die Form ist zweckmäßigerweise auf eine Temperatur von 120 bis 180 °C, vorzugsweise auf 125 bis 160 °C, vorgeheizt. Da die Schaumfolien und das textile Fasergebilde bereits vorher in die Form eingelegt worden waren, hatten auch diese die Formtemperatur angenommen. Die Lactam-Schmelze erwärmte sich in der Form rasch auf deren Temperatur und polymerisierte dabei innerhalb eines Zeitraums von weniger als 3 min. Zweckmäßigerweise wird nach Füllen der Form bei Kristallisationsbeginn noch einige Sekunden mit einem Flächenpreßdruck von 10 bis 300 kN/m² nachgepreßt. Im allgemeinen kann das fertige Formteil bereits nach 1 bis 2 min aus der Form entnommen werden. Bei einer Polymerisationstemperatur zwischen 120 und 180 °C entsteht ein hochmolekulares Polyamid mit einem K-Wert (nach Fikentscher, Cellulosechemie 13, S. 58) von mehr als 100, vorzugsweise von 110 bis 160, dessen Gehalt an Monomeren und Oligomeren unter 3 %, vorzugsweise unter 2 % liegt. Der K-Wert kann durch Zusatz bekannter Regler, z. B. langkettiger aliphatischer Monoamine, wie Stearylamin, oder Vernetzer, wie z. B. Methylenbiscaprolactam, gesteuert werden.

Bei dem kontinuierlichen Verfahren wird im Prinzip ähnlich gearbeitet. Auf einer Doppelbandpresse werden mindestens eine Schaumfolie, welche auf eine Trägerfolie z. B. aus Aluminium gelegt ist, und das textile Flächengebilde zusammengeführt. Diese werden mit der Katalysator und Aktivator enthaltenden Lactam-Schmelze getränkt und bei Temperaturen zwischen 120 und 180, vorzugsweise 125 bis 160 °C und einem Druck von 1 bis 200, vorzugsweise 5 bis 150 bar polymerisiert.

Nach diesen Verfahren kann man großflächige Formteile, beispielsweise Platten einer Dicke zwischen 0,2 und 40 mm herstellen. Diese können als Halbzeug durch Pressen bei Temperaturen oberhalb des Schmelzpunktes des Polyamids zu Fertigteilen weiterverarbeitet werden.

Die nach dem erfindungsgemäßen Verfahren hergestellten Formteile zeichnen sich durch gute mechanische Eigenschaften und eine einwandfreie, faserfreie Oberfläche aus. Sie eignen sich insbesondere als Formteile für die Automobil- und Flugzeugindustrie, beispielsweise für Karosserieteile, wie Kotflügel und Türen, sowie für technische Gehäuse und zur Herstellung von Sandwichteilen.

Die im Beispiel genannten Prozente beziehen sich auf das Gewicht.

Beispiel

Rezeptur der Komponente I :

42 g Caprolactam
8,0 g einer 17,5 %igen Lösung von Natriumlactamat in Caprolactam.

Rezeptur der Komponente II :

41,25 g Caprolactam
8,5 g einer Lösung aus 83,5 % Caprolactam und 16,5 % Hexamethylen diisocyanat

Die Komponente I wurde auf 120 °C, die Komponente II auf 110 °C vorgeheizt. Die Komponenten wurden in einem selbstreinigenden Mischkopf mit Räumkolben, hergestellt von der Fa. Elastogran Maschinenbau, Straßlach, im Verhältnis 1 : 1 gemischt.

Das Formnest ist eine Stahlform mit den Innenmaßen 640 × 240 × 4 mm, in welche zwei 2,5 mm dicke Melaminharz-Schaumfolien der Dichte 12 g/l und dazwischen eine 2,5 mm dicke Glasmatte mit einem Flächengewicht von 600 g.m$^{-2}$ ohne Fixierung eingelegt sind. Die Form samt Schaumfolien und Glasmatte wurde auf eine Temperatur von 150 °C vorgeheizt. Innerhalb von 7 s wurde die Mischung aus dem Mischkopf mit einem Druck von 10 bar in die Form überführt. 20 s nach Beendigung des Schusses wurde mit einem Flächen-Druck von 150 kN/m$^2$ nachgepreßt. Nach 1,5 min wurde die Form geöffnet und das fertige Formteil entnommen. Es hatte einen Glasfasergehalt von 12,5 %, einen K-Wert von 130 und wies eine spiegelglatte, faserfreie Oberfläche auf.

**Patentansprüche**

1. Flächiger Verbundwerkstoff, aufgebaut aus
A. einer Kernschicht aus einem textilen Fasergebilde,
B. mindestens einer Oberflächenschicht aus einem offenzelligen Aminoplast- oder Phenoplast-Schaum, und
C. einer Kunststoffmatrix aus aktiviert alkalisch polymerisiertem Polyamid, welche sowohl die Kernschicht als auch die Oberflächenschicht'en) durchdringt.

2. Flächiger Verbundwerkstoff nach Anspruch 1, dadurch gekennzeichnet, daß die Kernschicht 0,1 bis 20 mm und die Oberflächenschicht 0,1 bis 10 mm dick ist.

3. Diskontinuierliches Verfahren zur Herstellung des Verbundwerkstoffs nach Anspruch 1, dadurch gekennzeichnet, daß man eine Katalysator und Aktivator enthaltende Lactam-Schmelze in eine geschlossene Form unter einem Druck von mehr als 1 bar einpreßt, in die ein textiles Fasergebilde eingelegt ist, welches mindestens einseitig mit einer offenzelligen Aminoplast oder Phenoplast-Schaumfolie bedeckt ist, das Lactam in der Form bei Temperaturen zwischen 120 und 180 °C polymerisiert und gegebenenfalls bei Kristallisationsbeginn einen Flächenpreßdruck von 10 bis 300 kN/m$^2$ ausübt.

4. Kontinuierliches Verfahren zur Herstellung des Verbundwerkstoffs nach Anspruch 1, dadurch gekennzeichnet, daß man auf einer Doppelbandpresse mindestens eine Schaumfolie aus einem offenzelligen Aminoplast- oder Phenoplast-Schaum und ein textiles Flächengebilde zusammenführt, mit einer Katalysator und Aktivator enthaltenden Lactam-Schmelze tränkt und bei Temperaturen zwischen 120 und 180 °C und unter einem Druck von 1 bis 200 bar das Lactam polymerisiert.

5. Verwendung der flächigen Verbundwerkstoffe nach Anspruch 1 zur Herstellung von Fertigteilen durch Verpressen bei einer Temperatur oberhalb der Erweichungstemperatur des Polyamids.

**Claims**

1. A sheet-like composite material consisting of
A. a core layer comprising a fibrous textile structure,
B. one or more surface layers comprising an open-cell aminoplast or phenoplast foam and
C. a plastic matrix which is composed of nylon polymerized under activated alkaline conditions and penetrates both the core layer and the surface layer or layers.

2. A sheet-like composite material as claimed in claim 1, wherein the core layer is from 0.1 to 20 mm thick and the surface layer is from 0.1 to 10 mm thick.

3. A batchwise process for the production of a composite material as claimed in claim 1, wherein a lactam melt containing a catalyst and an activator is forced under a superatmospheric pressure greater than 1 bar into a close mold which contains a fibrous textile structure which is covered on one or both sides with an open-cell aminoplast or phenoplast foam sheet, the lactam is polymerized in the mold at from 120 to 180 °C and, if required, a surface pressure of from 10 to 300 kN/m$^2$ is exerted at the beginning of crystallization.

4. A continuous process for the production of a composite material as claimed in claim 1, wherein, on a double-belt press, one or more foam sheets, consisting of an open-cell aminoplast or phenoplast foam, and a sheet-like textile structure are combined, impregnated with a lactam melt containing a catalyst and an activator, and the lactam is polymerized at from 120 to 180 °C and under a pressure of from 1 to 200 bar.

5. Use of a sheet-like composite material as claimed in claim 1 for the production of finished articles by pressing at above the softening point of the nylon.

**Revendications**

1. Matériau composite plat, constitué
A. d'une couche de base en un produit fibreux textile
B. d'au moins une couche superficielle en une mousse d'aminoplaste ou de phénoplaste à pores ouverts et
C. d'une matrice en matière plastique constituée d'un polyamide obtenu par polymérisation alcaline activée, qui imprègne aussi bien la couche de base que la ou les couches superficielles.

2. Matériau composite plat suivant la revendication 1, caractérisé en ce que la couche de base a une épaisseur de 0,1 à 20 mm et la couche superficielle a une épaisseur de 0,1 à 10 mm.

3. Procédé discontinu de fabrication du matériau composite suivant la revendication 1, caractérisé en ce que l'on injecte sous pression une masse fondue de lactame contenant un catalyseur et un activateur dans une forme fermée sous une pression supérieure à 1 bar, forme dans laquelle est déposé un produit fibreux textile qui est recouvert au moins d'un côté d'une feuille de mousse d'aminoplaste ou de phénoplaste à pores ouverts, on polymérise le lactame dans la forme à des températures de 120 à 180 °C et on exerce éventuellement une pression à plat de 10 à 300 kN/m² lorsque la cristallisation s'amorce.

4. Procédé continu de fabrication du matériau composite suivant la revendication 1, caractérisé en ce qu'on réunit sur une presse à double bande au moins une feuille de mousse en une mousse d'aminoplaste ou de phénoplaste à pores ouverts et un produit textile plat, on les imprègne d'une masse fondue de lactame contenant un catalyseur et un activateur et on polymérise le lactame à des températures de 12 à 180 °C et sous une pression de 1 à 200 bars.

5. Utilisation du matériau composite plat suivant la revendication 1 pour la fabrication d'articles finis par compression à une température supérieure à la température de ramollissement du polyamide.